# EUROPEAN PATENT APPLICATION

(11) **EP 4 265 690 A1**
(43) Date of publication of application: **25.10.2023**
(21) Application number: 22169489.6
(22) Date of filing: 22.04.2022
(51) Int. Cl.: C09D 5/00

(54) **COMPOSITION**

(71) Applicant: Jotun A/S, 3202 Sandefjord (NO)
(72) Inventor: The designation of the inventor has not yet been filed
(74) Representative: Marks & Clerk LLP

(57) **Abstract**

The present invention provides a particulate coating composition, and preferably a powder coating composition, comprising:
(i) an epoxy resin,
(ii) a curing agent, wherein the curing agent comprises an imidazole, imidazoline or imidazolidine ring, and preferably an imidazoline ring;
(iii) a filler; and
(iv) a degassing agent, preferably benzoin

## Description

### INTRODUCTION

The present invention relates to a particulate coating composition, and particularly a powder coating composition, comprising an epoxy resin, a curing agent comprising an imidazole, imidazoline or imidazolidine ring, a filler and a degassing agent. The invention also relates to a container containing the composition and to a method of making the composition. Additionally the invention relates to a coating comprising the composition, a substrate coated with the composition and to methods of coating a substrate with the composition.

The coatings of the invention advantageously have strong resistance to electrolyte, i.e. they retain their electrical insulation, as well as their aesthetic appearance, after contact with electrolyte. The present invention therefore also relates to battery assemblies comprising a battery cell having a coating formed on at least one surface thereof, wherein the coating is formed from the composition herein described.

### BACKGROUND

Electric vehicles have been one of the fastest growing industries in the last few years, driven by an increased demand for more environmentally friendly transportation, in particular a reduction in CO₂ emissions. The battery is the heart of the electric car.

Electric vehicles typically comprise a battery assembly comprising many battery cells, each comprising electrolyte. The battery cells may be arranged in different configurations, but are interconnected to provide the overall battery assembly. Conventionally the assembly comprises modules and fixtures for holding the battery cells.

Blue PET tape has traditionally been used for the insulation of battery cells in electric vehicles. However, there are some disadvantages to the use of PET tape, e.g. it softens at higher temperatures, because it is a thermal plastic film, and size stabilization becomes an issue at higher temperatures. In addition, PET melts when the temperature exceeds approx. 110 °C, which increases the risk of battery fire. This is a particular concern for battery manufacturers because battery cells made with PET film spread fire quickly. Finally, adhesion loss occurs with the PET film when a rapid temperature change occurs, which potentially can shortcut the battery.

At the same time, there is an increase in demand for energy density in batteries for use in the vehicle industry. As a result, there is a trend to remove modules and fixtures present in battery assemblies to provide more space for battery cells. This technology is referred to as "Cell to Pack (CTP)" technology. As there is no fixture in a CTP battery assembly or pack, battery cells in the pack must be bonded together with structural glue to form a block. The bonded cells need to survive vibration during the service life of the electric vehicle. Therefore, the bonding strength between battery cells is critical. PET tape has a low bonding strength of about 5 MPa to the aluminium substrate of batteries and cannot meet the high requirement of the new technology.

Powder coatings, which have no volatile organic compounds (VOCs), and have excellent adhesion to both the aluminium substrate of battery cells and the structural glue used in CTP battery assemblies are receiving increased attention as a possible alternative to traditional PET tape. One of the main challenges to be overcome to turn this concept into a practical reality is providing coatings that have electrolyte resistance, i.e. coatings which have a performance that is not negatively impacted by contact with electrolyte.

The lowest powder coating curing temperature is 120-130°C. However, the electrolyte present in battery cells is damaged if the electrolyte is exposed to these temperatures. Thus, the battery cell must be coated with the powder coating first and then filled with the electrolyte. Unfortunately spillage is unavoidable during electrolyte filling and there will also be some evaporation of the electrolyte. The powder coating must maintain its designed electric insulation property, and other properties, after contact with the electrolyte.

This is a challenge because the chemicals present in electrolytes are highly corrosive. For instance, a lithium battery contains solvents, additives, and lithium salts, mainly lithium hexafluorophosphate (LiPF6) and other lithium base salts. When electrolyte is spilled during filling, the coating on the battery cell comes into contact with hydrofluoric acid, generated by reaction of LiPF6 and water in the air, which is detrimental. Coatings are destroyed very quickly if a large spill occurs, and irreversibly damaged, even if a minor spills occur, e.g. insulative property is lost. The other chemicals, e.g. solvents, present in electrolyte similarly have a negative impact on the key properties of the coating if contact occurs. For instance, contact with electrolyte often causes the coating to be discoloured, to lose insulative effect and/or to lose adhesion to the substrate.

Other types of battery may contain different salts e.g. be based on nickel, cobalt, and manganese salts, but they all tend to contain similar solvents. The main components of the solvent are ethylene carbonate (EC), dimethyl carbonate (DMC), diethyl carbonate (DEC), ethyl methyl carbonate (EMC), carboxylic ester and fluoro-ether. Suitable coatings for use on battery cells must be able to withstand contact with these solvents as well as the corrosive compounds formed if spillage occurs.

### SUMMARY OF THE INVENTION

Viewed from a first aspect, the present invention provides a particulate coating composition, and preferably a powder coating composition, comprising:
(i) an epoxy resin,
(ii) a curing agent, wherein the curing agent comprises an imidazole, imidazoline or imidazolidine ring, and preferably an imidazoline ring;
(iii) a filler; and
(iv) a degassing agent, preferably benzoin.

Viewed from a further aspect, the present invention provides a container containing a particulate coating composition, and preferably a powder coating composition, as hereinbefore described.

Viewed from a further aspect, the present invention provides a process for preparing a particulate coating composition, and preferably a powder coating composition, as hereinbefore described, comprising:
(i) blending epoxy resin, curing agent, wherein the curing agent comprises an imidazole, imidazoline or imidazolidine ring, and preferably an imidazoline ring, filler and degassing agent, to form a mixture; and
(ii) extruding said mixture to form particles.

Viewed from a further aspect, the present invention provides the use of a particulate coating composition, and preferably a powder coating composition, as hereinbefore described to coat a substrate, preferably a metal substrate, e.g. aluminium.

Viewed from a further aspect, the present invention provides a method for coating a substrate, preferably a metal substrate, e.g. aluminium, with a particulate coating composition, preferably a powder coating composition, as hereinbefore described, comprising:
i) applying said particulate coating composition to said substrate; and
ii) curing said particulate coating composition.

Viewed from a further aspect, the present invention provides a coating, preferably a cured coating, comprising a particulate coating composition, and preferably a powder coating composition, as hereinbefore described.

Viewed from a further aspect, the present invention provides a substrate, preferably a metal substrate, e.g. aluminium, coated with a particulate coating composition, and preferably a powder coating composition, as hereinbefore described or a coating as hereinbefore described.

Viewed from a further aspect, the present invention provides a battery assembly comprising at least one battery cell, wherein said at least one battery cell has a coating formed on at least one surface, and said coating is formed from a composition comprising:
(i) epoxy resin,
(ii) curing agent, wherein the curing agent comprises an imidazole, imidazoline or imidazolidine ring, and preferably an imidazoline ring;
(iii) filler; and
(iv) optionally a degassing agent, preferably benzoin

### DEFINITIONS

As used herein the term "particulate coating composition" refers to a mixture of particles which when applied to a surface and heated, e.g. cured, forms a coating thereon.

As used herein the term "powder coating composition" refers to dry, free flowing powder which when applied to a surface and heated, e.g. cured, forms a coating thereon. Typically the particles that constitute the powder have an average diameter of 10-120 µm.

As used herein the term "epoxy" refers to a three-atom cyclic ether.

As used herein the term "epoxy-based" refers to a polymer or oligomer comprising epoxy groups and/or modified epoxy groups. The term epoxy-based binder encompasses binders that have the traditional epoxy backbone but where epoxy endgroups are modified with, e.g. acrylic or methacrylic functional groups that can be cured with the same curing agents as the epoxy groups. The epoxy binder will comprise at least some epoxy groups. The term epoxy is used interchangeably with epoxide.

As used herein the term "solid epoxy resin" refers to an epoxy polymer that is solid at ambient temperature and pressure (25 °C and 1 atm). Thus term "solid" refers to the physical state of the epoxy-based binder.

As used herein, the phrase "epoxy equivalent weight" or "EEW" refers to the number of grams of epoxy resin required to give 1 mole of epoxy groups. It is measured by ASTM D-1652.

As used herein the term "molecular weight" refers to weight average molecular weight (Mw), unless otherwise specified.

As used herein the term "curing agent" refers to a compound which, when mixed with the epoxy resin, produces a cured or hardened coating by generating cross-links within the polymer. Sometimes curing agents are referred to as hardeners.

As used herein the terms "curing accelerator" and "accelerator" are used synonymously and refer to compounds which increase the rate of the curing reaction to cure or harden the coating.

As used herein the term "filler" refers to solid particles. Typically, fillers are incorporated into particulate coating compositions to increase their volume. Sometimes fillers are referred to as "extenders".

As used herein the term "spherical", when used in relation to particles encompasses substantially spherical and spherical particles. Substantially spherical particles are identical in size in each of the x, y and z dimensions, ± 1.2 µm, more preferably ± 0.6 µm.

As used herein the term "average diameter" refers to the Z-average diameter size as determined by ISO 22412:2017 using a Malvern Mastersizer 2000.

As used herein the term D₉₀ refers to the size at which 90 % of the particles have a diameter smaller than the value recited.

As used herein the term D₅₀ refers to the size at which 50% of the particles have a diameter smaller than the value recited.

As used herein the term D₁₀ refers to the size at which 10% of the particles have a diameter smaller than the value recited.

As used herein the term "degassing agent" refers to a compound that is added to a composition to remove gases, e.g. air, and/or promote dissolution of gases so as to avoid the formation of pinholes and bubbles in the coating once formed.

As used herein the term "levelling agent" refers to a compound that is added to particulate coating compositions to facilitate powder flow during melting stage, e.g. by disrupting weak bonding between particles within the powder and/or by lubricating movement.

As used herein the term "flow additive" or "flow agent" refers to a compound that is added to particulate coating compositions to reduce surface tension and reduce surface imperfections, e.g. craters, pinholes and fish eyes, and increase the surface smoothness.

As used herein the term "colour pigment" is a pigment that is added to a composition to give colour. Colour pigments include white pigments, such as TiO₂.

As used herein the term "rheology modifier" refers to a compound which improves the uniformity of consistency, and application properties, of a coating composition.

As used herein the term "weight % (wt%)", when used in relation to the coating compositions, refers to the weight of individual constituents of a composition relative to the total weight of the composition. The total wt% of any given coating composition is 100 wt%.

### DETAILED DESCRIPTION OF THE INVENTION

The present invention relates to a particulate coating composition comprising:
(i) an epoxy resin,
(ii) a curing agent, wherein the curing agent comprises an imidazole, imidazoline or imidazolidine ring, and preferably an imidazoline ring;
(iii) a filler; and
(iv) a degassing agent, preferably benzoin

Preferably the particulate coating composition is a powder coating composition.

Optionally the coating composition of the present invention further comprises: (v) flow additive; (vi) colour pigments; (vii) levelling agent and/or (viii) additives.

The particulate coating compositions of the present invention advantageously produce coatings that are more resistant to contact with electrolyte, e.g. electrolyte present in lithium batteries, than other particulate coatings. More specifically the coating compositions of the invention produce coatings that maintain their insulation and voltage resistance properties, even after soaking in electrolyte (i.e. extreme conditions). The coating compositions of the present invention also produce coatings that are less prone to discolouration upon contact with electrolyte than other powder coatings, which means they retain a pleasing aesthetic appearance for longer. The coatings produced by the coating compositions of the invention achieve improved resistance to damage from electrolyte contact, whilst maintaining suitable adhesion to a metal, e.g. aluminium substrate.

### Epoxy resin

The particulate coating composition of the present invention comprises an epoxy resin. The epoxy resin is preferably a solid epoxy resin.

Preferred epoxy resins present in the coating compositions of the present invention have an epoxy equivalent weight (EEW) of 200-1950 g/eq, more preferably 200 to 1300 g/eq, and still more preferably 400-1300g/eq.

There are two main categories of epoxy resins, glycidyl epoxy resins and non-glycidyl epoxy resins. Some classes of glycidyl epoxy resins include glycidyl-ether epoxy resins, glycidyl-ester epoxy resins and glycidyl-amine epoxy resins. Some classes of non-glycidyl epoxy resins include aliphatic epoxy resin and cycloaliphatic epoxy resin.

Preferably the solid epoxy resin present in the particulate coating compositions of the present invention comprises a glycidyl epoxy resin and more preferably a glycidyl-ether epoxy resin. Glycidyl-ether epoxy resins are generally prepared via a condensation reaction of a dihydroxy compound and epichlorohydrin. Preferably the dihydroxy compound is a bisphenol compound.

Representative examples of solid epoxy resins suitable for use in the compositions of the invention include bisphenol A based epoxy resins, bisphenol F based epoxy resins, novolac-modified bisphenol A based epoxy resin, isocyanate modified bisphenol A epoxy resin, cresol novolac type epoxy resin, O-cresol epoxy resin, silane modified bisphenol A epoxy resin, rubber modified bisphenol A epoxy resin, silicone modified bisphenol A epoxy resin, and mixtures thereof. In preferred particulate coating compositions, the solid epoxy resins are selected from bisphenol A based epoxy resins, bisphenol F based epoxy resins, novolac-modified bisphenol A based epoxy resin, isocyanate modified bisphenol A epoxy resin, cresol novolac type epoxy resin, O-cresol epoxy resin, and mixtures thereof. In particularly preferred particulate coating compositions, the solid epoxy resins are selected from bisphenol A based epoxy resins, novolac-modified bisphenol A based epoxy resin, bisphenol F epoxy resin, isocyanate modified bisphenol A epoxy resin, and mixtures thereof. Bisphenol A based epoxy resin, novolac-modified bisphenol A based epoxy resin and mixtures thereof are particularly preferred.

Preferred solid epoxy resins, e.g. bisphenol A based epoxy resins, novolac-modified bisphenol A based epoxy resins, present in the coating compositions of the present invention have an equivalent epoxy weight (EEW) of 200-1950 g/eq, more preferably 200 to 1300 g/eq, still more preferably 400-1300 g/eq, yet more preferably 700 -1300 g/eq and especially preferably 700 to 1000 g/eq. It is believed that the EEW plays an important role in the performance of the coating. Epoxy resin having a relatively lower EEW tends to have a lower viscosity and better wetting properties, and thereby better adhesion, but too low EEW gives rise to sagging and/or bubbles in the final coating. On the other hand, epoxy resin with a relatively high EEW tends to slow down degassing of the air in the coating as it cures, which is believed to be detrimental for electrolyte resistance. Moreover, if the EEW of the epoxy resin is too low or too high, the composition is challenging to process during coating and the final coating produced from the composition tends to have a poor appearance, poor coverage at the edges of the substrate giving rise to poor protection at the edges as well as poor storage stability. The particulate coating composition of the present invention may comprise one or more solid epoxy resins. In some preferred particulate coating compositions of the present invention, only one type of solid epoxy resin is present and in particular a bisphenol A based epoxy resin, a novolac-modified bisphenol A based epoxy resin or an isocyanate modified bisphenol A epoxy resin. Other preferred coating compositions of the present invention comprise a mixture of two or more, e.g. 2 types of solid epoxy resin. Mixtures of bisphenol A based epoxy resin and novolac-modified bisphenol A based epoxy resin are particularly preferred. When a mixture of bisphenol A based epoxy resin and novolac modified bisphenol A based epoxy resin is used, the weight ratio of bisphenol A based epoxy resin to novolac-modified bisphenol A based epoxy resin is preferably 10:1 to 1:10, more preferably 5:1 to 1:5 and still more preferably 2:1 to 1:2.

Suitable epoxy resins are available commercially. Representative examples of suitable epoxy resins include KD-213, KD-214C, KD-242K, KD-2200, KD-242G, KD-243G, KD-2103, KD-214M, KD-2203, KD-2104, KD214L, KD-9002, KD-9003, KD-9004, KD-213C, KD-213H, D.E.R 6805, NPCN-704, D.E.R. 6224, D.E.R. 6225, D.E.R. 662E, KD-211G, D.E.R. 662UH, D.E.R. 6635, D.E.R. 663U, D.E.R. 663UE, D.E.R. 664, D.E.R. 664U, D.E.R. 664UE, D.E.R. 672U D.E.R. 6510HT, YDCN-500-90P, BE501H, BE502L, BE502, BE503L, BE503, BE504, BE504H, BE505H, BE507, YD-017, BE574P, BFE107, MOE-380, MOE-400, CNE202, CNE220, CNE220H, BE502S, BE503S, NPES-901, NPES-901H, NPES-902, NPES-902H, NPES-903K, NPES-903, NPES-903H, NPES-904, NPES-303, NPES-904H, NPES-304, NPES-907, NPCN-704 and NPER-450.

The total amount of epoxy resin present in the particulate coating composition of the present invention is preferably 40-99 wt%, more preferably 50-95 wt% and still more preferably 60-90 wt%, based on the total weight of the particulate coating composition.

### Curing agent

The particulate coating composition of the present invention also comprises a curing agent. The curing agent reacts with the epoxy resin during curing to form a coating, e.g. a film coating. The curing agent therefore facilitates the provision of a coating composition with an acceptable cure time.

The curing agent present in the particulate coating composition of the present invention preferably comprises an imidazole, imidazoline or imidazolidine ring. More preferably the curing agent present in the particulate coating composition of the present invention comprises an imidazoline ring. The imidazoline ring may be 2-imidazoline, 3-imidazoline or 4-imidazoline. Preferably the imidazoline ring is 2-imidazoline.

The imidazole, imidazoline or imidazolidine ring present in the curing agent present in the particulate coating composition of the present invention may be unsubstituted or substituted. Preferably the imidazole, imidazoline or imidazolidine ring is substituted. Any number of substituents may be present, more preferably one or two substituents and still more preferably one substituent is present.

When substituted, the imidazole, imidazoline or imidazolidine ring may be substituted in any position. Preferably the imidazole, imidazoline or imidazolidine ring is substituted in the 2-position, e.g. a preferred curing agent comprises an imidazoline ring substituted in the 2-position. Optionally, the imidazole, imidazoline or imidazolidine ring present in the curing agent present in the particulate coating composition of the invention is a dimer, e.g. linked by an alkylene linker between the two 2-positions of the imidazole, imidazoline or imidazolidine rings.

Examples of suitable substituents that may be present on the imidazole, imidazoline or imidazolidine ring include aromatic substituents, C₁-C₁₂ alkyl substituents, C₁-C₆ alkylene substituents, alcohols, amines, halides, C₁-C₆ alkoxy, and nitrile. Preferred substituents include aromatic substituents (e.g. phenyl or benzyl) and C₁-C₁₂ alkyl substituents (e.g. methyl). Still more preferably the imidazole, imidazoline or imidazolidine ring has an aromatic substituent. Examples of suitable aromatic substituents include phenyl and heterocycles such as pyridine, imidazole, furan and thiophene. A preferred aromatic substituent is phenyl, especially unsubstituted phenyl.

The nitrogen atoms of the imidazole, imidazoline or imidazoline ring may be substituted or unsubstituted. Examples of suitable substituents include C₁-C₁₂ alkyl groups, alkyl alcohols and alkyl amines. The nitrogen atoms are preferably unsubstituted.

When phenyl is present as a substituent on an imidazole, imidazoline or imidazoline ring, the phenyl may be unsubstituted or substituted. Examples of suitable substituents include C₁-C₆ alkyl, C₁-C₆ alkoxy, nitrile, hydroxyl, halide, thiol, and amine. The phenyl substituent may have one or several substituents located in any position on the aromatic ring. Preferably the phenyl present as a substituent is unsubstituted.

Particularly preferred particulate coating compositions of the present invention comprise a curing agent, which comprises an imidazoline ring, and still more preferably a 2-imidazoline ring.

Particularly preferred curing agents present in the coating compositions of the present invention comprise (e.g. consist of) a 2-imidazoline ring, substituted at the 2-position. Still more preferably the substituent is aromatic (e.g. phenyl) or C₁-C₁₂ alkyl substituents (e.g. methyl).

Especially preferably the curing agent present in the particulate coating composition of the present invention comprises (e.g. consists of) 2-phenyl-2-imidazoline (Cas number 936-49-2).

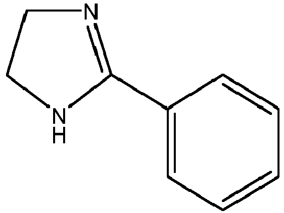

More often imidazolines are used as accelerators. Without being bound by theory it is believed that the present coating composition they are used as the curing agent.

The curing agent preferably comprises 2-phenyl-2-imidazoline in, for example, > 50 wt%, more preferably >75 wt%, still more preferably > 90 wt%, and yet more preferably > 95wt% of the curing agent.

The 2-phenyl-2-imidazoline preferably present in the particulate coating composition preferably has a purity of 98 % or more, more preferably 99% or more.

Suitable curing agents comprising an imidazole, imidazoline or imidazolidine ring are commercially available. For instance, 2-phenyl-2-imidazoline for use in the particulate coating compositions of the present invention is available commercially, e.g. under the trade name HC31 from Huangshan Huahui Technology Co. Ltd, under the tradename Vestagon B31 from Evonik Degussa Coatings & Colour and under the tradename MB 31 from Huangshan Deping Chemical Co. Ltd.

It will be appreciated that the curing agent and the epoxy resin need to react in order to cure the coating. The suitable amount of curing agent and epoxy resin depends on the relative numbers of reactive groups, i.e. epoxide in epoxy resin and amine in curing agent. Generally speaking, the amount of curing agent present (in wt%), based on the amount of epoxy resin present based on wt%, is preferably 1-35 wt%, more preferably 1.5-20 wt%, and still more preferably 2-15 wt%.

It is preferred if these components are mixed in such a ratio that the curing agent is present in a stoichiometric amount that is 80-120 %, more preferably 90-115 % and still more preferably 100-110 %, based on the number of reactive groups in the curing agent relative to the number of reactive groups present in the epoxy resin.

The total amount of epoxy binder system, wherein said system comprises the one or more epoxy resin(s) and the one or more curing agent(s), is preferably 40-99 wt%, more preferably 50-95 wt% and still more preferably 60-90 wt%, based on the total weight of the particulate coating composition.

### Fillers

The particulate coating composition of the present invention comprises filler. Preferred fillers present in the particulate coating compositions are inorganic fillers. Suitable inorganic filler particles exist in different forms, e.g. spherical, lamellar, nodular and irregular.

The fillers present in the particulate coating composition of the present invention preferably have a D₅₀ of 0.5 to 25 µm, more preferably 1-20 µm, still more preferably 1-15 µm and yet more preferably 1-10 µm.

In preferred particulate coating compositions of the present invention the filler is selected from barium sulphate, preferably precipitated barium sulphate, mica, talc, wollastonite (calcium metasilicate), glass flake, nepheline, kaolin, dolomite, diatomite, boron nitride, alumina, aluminium hydroxide and mixtures thereof and more preferably barium sulphate, preferably precipitated barium sulphate, kaolin and mixtures thereof. In particularly preferred particulate coating compositions the filler is selected from precipitated barium sulphate, kaolin, mica and mixtures thereof.

The particulate coating compositions of the present invention may comprise a single filler or a combination of two or more fillers. In some preferred particulate coating compositions, a single filler is present. When a single filler is present, the filler is preferably selected from precipitated barium sulphate, wollastonite (calcium metasilicate), glass flake, nepheline, kaolin, dolomite, diatomite, boron nitride, alumina, aluminium hydroxide and mixtures thereof.

In some other preferred particulate coating compositions, combinations of two fillers are preferred. Representative examples of some preferred combinations include precipitated barium sulphate and mica, precipitated barium sulphate and talc, precipitated barium sulphate and kaolin, mica and talc, kaolin and talc, and kaolin and mica. Particularly preferred combinations of fillers are precipitated barium sulphate and kaolin, kaolin and talc, and kaolin and mica.

Suitable fillers are available commercially. Representative examples of suitable fillers include Blanc Fine GM-80 from Gemme Speciality Chemicals Co. Ltd, Blanc Fixe L from Yillong Chemical Group Limited, GL-2500 from Jiangsu Qunxin powder technology Co. Ltd, Specswhite and Micro Mica W1 from Imerys Minerals Ltd, JLH-60D and H6 from Shenzhen JinHaoHui Industrial Development Co. Ltd, and GA-1 from Chuzhou Gera Minerals Co. Ltd.

The total amount of filler present in the particulate coating compositions of the present invention is preferably 0.01-60 wt%, more preferably 1.5-50 wt%, and still more preferably 10-38 wt% based on the total weight of the particulate coating composition.

### Degassing agent

The particulate coating composition of the present invention comprises a degassing agent. Conventional, commercially available, degassing agents may be used.

Representative examples of suitable degassing agent include cyclohexane dimethanol bisbenzoate, benzoin, benzoin derivatives and mixtures thereof. Preferably the degassing agent is benzoin or a benzoin derivative, and particularly preferably benzoin. Suitable degassing agents are available from a wide range of commercial suppliers, e.g. benzoin is available under the tradename Miwon benzoin from Miwon Speciality Chemical Co. Ltd, and as benzoin from Orgamine Chemicals PVT Ltd, and Ningbo South Sea Chemical Co. Ltd.

Preferred coating compositions of the present invention comprise 0.15-0.45 wt%, more preferably 0.17-0.4 wt% and still more preferably 0.2-0.35 wt% degassing agent, based on the total weight of the particulate coating composition.

### Flow additive

The particulate coating composition of the present invention preferably comprises a flow additive. The presence of a flow additive tends to increase surface smoothness, e.g. by reducing or eliminating surface imperfections such as craters, fish-eyes and pin holes. This is achieved by improving the melt-flow characteristics of the particulate coating composition.

Conventional, commercially available, flow additives may be used, e.g. PCL-100 from Kscnt Co. Ltd, Rheoflow PLP 100H(A) from KS Chemical Co. Ltd and Resiflow PV 88 from Worlee-Chemie GmbH.

Representative examples of suitable flow additives include acrylics, silicon containing compounds, and fluorine-based polymers. Preferred particulate coating compositions of the invention comprise a flow additive, which is an acrylic.

Preferred coating compositions of the present invention comprise 0.01-5 wt%, more preferably 0.1-3 wt% and still more preferably 0.5-1.5 wt% flow additive, based on the total weight of the particulate coating composition.

### Colour pigments

The particulate coating composition of the present invention preferably comprises at least one colour pigment. The colour pigment may be inorganic or organic colour pigments. Organic colour pigments are preferred.

Representative examples of suitable inorganic colour pigments for inclusion in the particulate coating composition of the present invention include titanium dioxide, iron oxide red, black pigments, yellow pigments, chrome pigments, carbon black and combinations thereof.

Representative examples of suitable organic pigments for inclusion in the particulate coating composition of the present invention include phthalocyanine, azo, dioxazines, perylene, anthraquinone, thioindigo, isodibenzanthrone, triphendioxane, quinacridone pigments, vat dye pigments and combinations thereof.

Preferred colour pigments for inclusion in the particulate coating composition of the present invention are selected from titanium dioxide, carbon black, organic red pigments, organic yellow pigments, organic blue pigments, ultramarine blue, and organic green pigments.

Other preferred particulate coating compositions of the present invention comprise less than 5 wt%, more preferably less than 2 wt%, and still more preferably less than 1.1 wt% carbon black. Without wishing to be bound by theory it has been found that when higher levels of carbon black are present, the electrolyte resistance of the coatings produced is compromised. This is thought to be due to the conductivity of carbon black.

Suitable colour pigments are commercially available, e.g. NTR-606, Beablack 2669F, Beablack 2870F, Red 122, DPP Red SR2P, Yellow 139, Sudafast blue 2789, Blue 51, Green 2730K.

Generally speaking, colour pigments should be included in the particulate coating composition in the minimum amount necessary to give the desired colour. The amount of colour pigment required, in part, depends on the type of colour pigment. By way of example, titanium dioxide might be present in 25 %wt while carbon black might be present in an amount up to 1.1%wt. The skilled person will be able to determine suitable amounts for different types of pigments.

When present, the amount of colour pigment present in the particulate coating compositions of the present invention is preferably 0.0005-30 wt%, more preferably 0.001-25 wt%, and still more preferably 0.01-20 wt%, based on the total weight of the particulate coating composition.

### Levelling agent

The particulate coating composition of the present invention preferably comprises a levelling agent. Examples of suitable levelling agents include copolymers of methylacrylate and butylacrylate. Suitable levelling agents are commercially available, e.g. BLC701B from Ningbo South Sea Chemical Co. Ltd. and WK701 from Ningbo Wecan Chemical Co., Ltd. The levelling agents enhance the compositions melt-flow characteristics and help eliminate surface defects during curing.

When present, the amount of levelling agent present in the particulate compositions of the present invention is preferably 0.01-5 wt%, more preferably 0.1-3 wt% and still more preferably 0.5-1.5 wt%, based on the total weight of the particulate coating composition.

### Additives

The particulate coating composition of the invention optionally comprises one or more additives. Examples of additives that are optionally present in the composition of the invention include metal phosphate, metal borate, amino alcohols, adhesion promoters, gloss modifiers, drying agents, waxes, ethylene bis stearamide (EBS), antioxidants, rheology additives, matting agent and surface modifying agents. Preferred additives that are present in the particulate coating composition of the present invention are gloss modifiers, rheology modifiers, surface modifying agents, matting agent and mixtures thereof. Representative examples of suitable rheology modifiers are hydrogenated castor oil and low melting polyethylene waxes.

Additional additives are preferably present in an amount of 0-10 wt%, more preferably 0.1-5 wt%, still more preferably 0.2-4 wt% and particularly preferably 0.5-3 wt%, based on the total weight of the particulate coating composition.

### Compositions

A preferred particulate coating composition of the present invention comprises:
(i) an epoxy resin,
(ii) a curing agent, wherein the curing agent comprises an imidazole, imidazoline or imidazolidine ring, and preferably an imidazoline ring;
(iii) a filler;
(iv) a degassing agent, preferably benzoin;
(v) flow additive;
(vi) preferably colour pigment; and
(vii) levelling agent.

A further preferred particulate coating composition of the present invention comprises:
(i) an epoxy resin,
(ii) a curing agent, wherein the curing agent comprises an imidazole, imidazoline or imidazolidine ring, and preferably an imidazoline ring;
(iii) a filler selected from barium sulphate, preferably precipitated barium sulphate, mica, talc, wollastonite (calcium metasilicate), glass flake, nepheline, kaolin, dolomite, diatomite, boron nitride, alumina, aluminium hydroxide and mixtures thereof;
(iv) benzoin;
(v) flow additive;
(vi) colour pigment; and
(vii) levelling agent.

A yet further preferred particulate coating composition of the present invention comprises:
(i) an epoxy resin selected from bisphenol A based epoxy resins, bisphenol F based epoxy resins, novolac-modified bisphenol A based epoxy resin, isocyanate modified bisphenol A epoxy resin, cresol novolac type epoxy resin, O-cresol epoxy resin, silane modified bisphenol A epoxy resin, rubber modified bisphenol A epoxy resin, silicone modified bisphenol A epoxy resin, and mixtures thereof,
(ii) a curing agent, wherein the curing agent comprises an imidazole, imidazoline or imidazolidine ring, and preferably an imidazoline ring;
(iii) a filler selected from barium sulphate, preferably precipitated barium sulphate, mica, talc, wollastonite (calcium metasilicate), glass flake, nepheline, kaolin, dolomite, diatomite, boron nitride, alumina, aluminium hydroxide and mixtures thereof;
(iv) benzoin;
(v) flow additive;
(vi) colour pigment; and
(vii) levelling agent.

In particularly preferred particulate coating compositions of the present invention, the curing agent is 2-phenyl-2-imidazoline.

Preferred particulate coating compositions of the present invention have a pigment volume concentration (PVC) of 0-25, more preferably 7-18 and still more preferably 9-13, e.g. as calculated from the theoretical density of the components of the coating and their wt%.

Some particularly preferred particulate coating compositions of the present invention are as follows:
- bisphenol F based-epoxy 65.9 wt%, 2-phenylimidazoline 4.1 wt%, pigments 8.4 wt%, prec. barium sulphate 20.2 %wt, benzoin, flow agents and additives 1.4 wt%,
- epoxy type 3 64.8 wt%, 2-phenylimidazoline 5.2 wt%, pigments 8.4 wt%, prec. barium sulphate 20.2 %wt, benzoin, flow agents and additives 1.4 wt%,
- epoxy type 3 64.2 wt%, 2-phenylimidazoline 5.8 wt%, pigments 8.4 wt%, prec. barium sulphate 20.2 %wt, benzoin, flow agents and additives 1.4 wt%,
- epoxy type 3 66.5 wt%, 2-phenylimidazoline 3.5 wt%, prec. barium sulphate 27.1 %wt, organic green pigment 1.5 %wt, benzoin, flow agents and additives 1.4 wt%,
- epoxy type 3 66.5 wt%, 2-phenylimidazoline 3.5 wt%, carbon black 1.1 wt%, prec. barium sulphate 27.5 wt%, benzoin, flow agents and additives 1.4 wt%,
- epoxy type 3 66.5 wt%, 2-phenylimidazoline 3.5 wt%, pigments 8.4 wt%, Kaolin 20.2 wt%, benzoin, flow agents and additives 1.4 wt%,
- epoxy type 3 66.5 wt%, 2-phenylimidazoline 3.5 wt%, pigments 8.4 wt%, prec. barium sulphate 10.1 wt%, Kaolin 10.1 %wt, benzoin, flow agents and additives 1.4 wt%,
- epoxy type 3 66.5 wt%, 2-phenylimidazoline 3.5 wt%, pigments 8.4 wt%, talc 10.1 wt%, Kaolin 10.1 %wt, benzoin, flow agents and additives 1.4 wt%
- epoxy type 3 66.5 wt%, 2-phenylimidazoline 3.5 wt%, pigments 8.4 wt%, prec. barium sulphate 20.2 wt%, benzoin, flow agents and additives 1.4 wt%, and
- epoxy type 3 66.5 wt%, 2-phenylimidazoline 3.5 wt%, titanium dioxide 25 wt%, prec. barium sulphate 3.6 wt%, benzoin, flow agents and additives 1.4 wt%.

The particulate coating compositions of the invention preferably provide coatings that are electrically insulating, i.e. have high electric resistance and high voltage resistance. Preferably the particulate coating composition of the invention provides coatings that resist DC 1000 V with a resistance of >500 MΩ. Preferably the particulate coating composition of the invention provides coatings that resist DC 2700 V, with a maximum leakage current of not more than 0.1 mA.

It is a feature of the invention that the particulate coating composition provides coatings that are electrolyte resistant. Thus the particulate coating compositions provide coatings that have electrical insulation after exposure to electrolyte. Preferably the particulate coating composition provides coatings having insulation resistance, after soaking in electrolyte, according to the criteria set out in the examples herein, and resists DC 1000 V with a resistance of >500 MΩ. Preferably the particulate coating composition provides coatings having voltage resistance, after soaking in electrolyte, according to the criteria set out in the examples herein and resists DC 2700 V, with a maximum leakage current of not more than 0.1 mA. Preferably the particulate coating composition provides coatings having insulation and voltage resistance, after soaking in electrolyte, according to the criteria set out in the examples herein, and resists DC 1000 V with a resistance of >500 MΩ and resists DC 2700 V, with a maximum leakage current of not more than 0.1 mA.

Yet another feature of the invention is that the particulate coating composition provides coatings with good adhesion to the substrate, preferably metal substrate, e.g. aluminium substrate, as well as to structural glue. Preferably the particulate coating composition provides coatings that pass the cross-cut test as described in ISO 2409:2013 (E).

Yet another feature of the invention is that the particulate coating composition provides coatings that resist discoloration by electrolyte. Preferably the coating only shows slight discolouration when it is soaked in electrolyte, e.g. as described in the examples section herein.

A further feature of the invention is that the particulate coating composition provides coatings that are water resistant, i.e. do not lose adhesion, swell significantly or blister upon exposure to water, even at high temperatures.

### Containers

The present invention also relates to a container containing a particulate coating composition as hereinbefore described. Suitable containers include cardboard boxes lined with a plastic bag and plastic bags (so called "big bags").

### Manufacture

The present invention also relates to a process for preparing a particulate coating composition as hereinbefore described comprising:
(i) blending epoxy resin, curing agent, wherein the curing agent comprises an imidazole, imidazoline or imidazolidine ring, and preferably an imidazoline ring, filler and degassing agent, to form a mixture; and
(ii) extruding said mixture to form particles.

The extruded particles may take any form, e.g. spherical particles, chips or flakes. Preferred processes of the invention further comprise milling the extruded particles to form powder. Milling may be carried out in any conventional mill to a particle size found most suitable for powder application. Other preferred processes of the invention further comprise sieving the milled particles.

Thus, a preferred process of the invention comprises:
(i) blending epoxy resin, curing agent, wherein the curing agent comprises an imidazole, imidazoline or imidazolidine ring, and preferably an imidazoline ring, filler and degassing agent, to form a mixture;
(ii) extruding said mixture to form particles;
(iii) milling said extruded particles to form milled particles; and
(iv) sieving said milled particles.

In particularly preferred processes of the invention, the curing agent is 2-phenyl-2-imidazoline.

After milling, sieving is preferably carried out to remove coarse particles.

Optionally a fluidizing agent (e.g. fume silica or aluminum oxide) is added during milling and/or sieving.

Any conventional mixing, extrusion and milling method may be used. The preferred extrusion conditions are conventional and will generally be kept at low temperature, e.g. below 140 °C, to avoid premature curing. The particle size distribution D₅₀ of the particulate coating composition is preferably in the range of 10 to 120 µm, and still more preferably 15 to 100 µm. The preferred particle size D₅₀ is at least 20 or 25 µm, and advantageously does not exceed 80 µm, e.g. 30 to 70 µm. In general, particle sizes can be established using a Malvern particle size analyser.

### Application to substrates and Coating

The present invention also relates to a method for coating a substrate with a particulate coating composition as hereinbefore described, comprising:
i) applying the particulate coating composition to said substrate; and
ii) curing said particulate coating composition.

Optionally the substrate is pre-treated, e.g. degreased, desalted, shot or grit blasted, dedusted, prior to application of the particulate coating composition.

In some methods of the invention the substrate is pre-heated and the heat in the substrate cures the coating.

Some methods of the invention therefore comprise:
i) pre-heating a substrate, e.g. to a temperature exceeding the curing temperature of the particulate coating composition;
ii) applying the particulate coating composition to said pre-heated substrate; and
iii) curing said particulate coating composition.

The particulate coating composition of the invention may be applied to a substrate by any conventional particulate, e.g. powder, coating method, e.g. electrostatic spraying or fluidisied bed. A cold or pre-heated substrate may, for example be coated in a spray booth, or a preheated substrate is dipped in a fluidised bed of the powder. Preheating preferably heats the substrate to a temperature above the fusion temperature of the powder and is retained for sufficient time to allow the coating to flow, fuse and cure into a continuous coating. Coating techniques are well known in the art and will be familiar to the skilled man. Electrostatic spraying is preferred.

The present invention also relates to use of a particulate coating composition as hereinbefore described to coat a substrate, preferably a metal substrate, e.g. aluminium. Preferably the dry thickness of the coating is 60 to 250 microns such as 80 to 200 microns especially 90 to 150 microns.

The present invention also relates to a coating comprising a particulate coating composition as hereinbefore described. Preferably the coating is cured. Alternatively viewed the present invention relates to a coating obtainable by spraying or dipping, and curing a particulate coating composition as hereinbefore described.

The particulate coating composition of the present invention may be used to form a single layer coating or be part of a multi-layered structure. The particulate coating composition of the present invention is preferably used to form a first or base layer on the substrate, e.g. battery cell. Preferably the coating of the present invention is the top or outermost layer that may be exposed to electrolyte.

### Curing

Once a substrate is coated with the particulate coating composition of the invention, the coating is preferably cured. Curing may be carried out by continuous heating, subsequent heating or residual heat in the substrate. Additionally, or alternatively, the particulate coating composition of the invention may be cured by placing the substrate in a post cure oven. The heating process enables the particles to melt and fuse and then cure.

The particulate coating composition is preferably free flowing during the curing operation. Advantageously this leads to smooth, even finishes. The thickness of the cured coating is preferably 60 to 250 microns such as 80 to 200 microns especially 90 to 150 microns.

The coating formed from the particulate coating composition of the invention is preferably electrically insulating, i.e. has high electric resistance and high voltage resistance. Preferably the coating formed from the particulate coating composition of the invention resists DC 1000 V with a resistance of >500 MΩ. Preferably the coating formed from the particulate coating composition of the invention resists 2700 V, with a maximum leakage current of not more than 0.1 mA.

It is a feature of the invention that the coating formed from the particulate coating composition of the invention is electrolyte resistant. Thus the coating has electrical insulation after exposure to electrolyte. Preferably the coating has insulation resistance, after soaking in electrolyte, according to the criteria set out in the examples herein, and resists DC 1000 V with a resistance of >500 MΩ. Preferably the coating has voltage resistance, after soaking in electrolyte, according to the criteria set out in the examples herein, and resists 2700 V, with a maximum leakage current of not more than 0.1 mA. Preferably the coating has insulation and voltage resistance, after soaking in electrolyte, according to the criteria set out in the examples herein, and resists DC 1000 V with a resistance of >500 MΩ and resists 2700 V, with a maximum leakage current of not more than 0.1 mA.

Yet another feature of the invention is that the coating formed from the particulate coating composition of the invention has good adhesion to the substrate, preferably metal substrate, e.g. aluminium substrate, as well as to structural glue. Preferably the coating formed from the particulate coating composition of the invention oases the cross-cut test as described in ISO 2409:2013 (E).

Yet another feature of the invention is that the coating formed from the particulate coating composition of the invention resists discoloration by electrolyte. Preferably the coating only shows slight discolouration when it is soaked in electrolyte, e.g. as described in the examples section herein.

A further feature of the invention is that the coating formed form the particulate coating composition of the invention is water resistant, i.e. does not loose adhesion, swell significantly or blister upon exposure to water, even at high temperatures.

### Substrate and Articles

The present invention also relates to a substrate coated with a particulate coating composition as hereinbefore described or a coating as hereinbefore described. The particulate coating composition of the invention may be applied to any substrate. A preferred substrate is metal, and still more preferably the substrate is aluminium. Particularly preferably the substrate is the aluminium surface of a battery cell, and especially preferably the aluminium surface of a battery cell present in a battery assembly, e.g. the battery assembly of an electric vehicle.

The substrate, e.g. aluminium surface of a battery cell, may be partially or completely coated with the particulate coating composition or coating of the invention. Preferably, however, substantially all of the substrate is coated with the particulate coating composition or coating of the invention. In the case of a battery cell, this preferably includes the entirety of the external walls of the cell, with the exception of the electrical contacts.

The present invention also relates to a battery assembly comprising at least one battery cell, wherein said at least one battery cell has a coating formed on at least one surface, and said coating is formed from a composition comprising:
(i) epoxy resin,
(ii) curing agent, wherein the curing agent comprises an imidazole, imidazoline or imidazolidine ring, and preferably an imidazoline ring;
(iii) filler; and
(iv) optionally a degassing agent, preferably benzoin

Preferably the battery assembly comprises a plurality of battery cells having a coating formed on at least one surface, wherein the coating is formed from a composition as herein described.

Preferred battery assemblies comprise a coating formed from preferred particulate coating compositions as hereinbefore described.

Further preferred battery assemblies comprise preferred coatings as hereinbefore described.

The invention will now be described with reference to the following non-limiting examples.

### EXAMPLES

### Materials

The polymers and compounds used in the examples were all available commercially. The polymers and compounds used are summarised in the table below.

| Ingredient | Function | Details |
|---|---|---|
| Type 3 epoxy. Solid epoxy resin derived from liquid epoxy resin and Bisphenol-A. | Binder | EEW 730-800 g/eq. Softening point 88-98°C. Melt viscosity 3500-7000 cps at 150°C |
| Novolac modified solid epoxy resin derived from liquid epoxy resin and Bisphenol-A. | Binder | EEW 750-850 g/eq. Softening point 105-118°C |
| Type 4 epoxy. Solid epoxy resin derived from liquid epoxy resin and Bisphenol-A. | Binder | EEW 875-975 g/eq. Softening point 95-105°C |
| Isocyanate modified bisphenol A epoxy resin | Binder | EEW 380-420 g/eq. Softening point 95-105°C |
| Type 5 epoxy. Solid epoxy resin derived from liquid epoxy resin and Bisphenol-A. | Binder | EEW 1150-1300 g/eq. Softening point 107-117°C |
| Bisphenol F type epoxy | Binder | EEW 600-700 g/eq. Softening point 70-80 °C |
| 2-Phenyl-2-imidazoline | Curing agent | ≥99% purity. Solidification point 90-110°C |
| Accelerated dicyandiamide | Curing agent | Minimum 95% of the particles pass through a size of 75 microns in a sieve analysis |
| o-Tolylbiguanide | Curing agent | Melting Point 139 - 143°C |
| Dicyandiamide (Dicy) a very fine particle size | Curing agent | Melting Point 210°C |
| 2-Methylimidazole | Curing agent | Melting Point 142-146°C, white or colorless solid flakes |
| 1,2,4,5-Benzenetetracarboxylic anhydride (PMDA) | Curing agent | Melting Point 283-287°C |
| Phenol excess type curing agent | Curing agent | Ph-OH EW(g/eq) 230-260, Softening point 73-85°C |
| TiO₂ | White pigment | Rutile titanium dioxide, particle size D50 0.28 µm |
| Carbon black | Black pigment | Average particle size D50 21±2 nm |
| Carbon black | Black pigment | Particle size D50 21 nm |
| Quinacridone | Organic Red pigment | Average particle size 50-150 nm |
| Phthalocyanine | Organic Blue pigment | < 1 micron, nanometer size range. |
| Diketo-pyrrolo-pyrrole | Organic Red pigment | < 1 micron, nanometer size range. |
| Sodium alumino sulpho silicate | Inorganic Blue pigment | < 1 micron, nanometer size range. |
| Phthalocyanine | Organic green pigment | < 1 micron, nanometer size range. |
| Barium sulfate | Filler | Synthetic barium sulfate precipitated with defined particle size. Free of impurities such as quartz. Particle size D50 approx. 1.0 µm, electrical conductivity approx. 150 S/cm |
| BaSO₄ | Filler | Micronized, high purity white barytes filler. Micronized, natural barium sulphate having a purity above 97%. Particle size D50 2-5 µm |
| Mica | Filler | Particle size D50 10 µm. Aspect ratio 70 to 100 |
| Talc | Filler | Particle size D50 8.2 µm D90 22 µm |
| Feldspar | Filler | Particle size D90 15 µm; D50 5.2 µm; D10 1 µm |
| Calcium Carbonate | Filler | Particle size D50 4.9 µm |
| Fused silica; SiO2 | Filler | Particle size D90 41±4 µm; D50 11±1.5 µm; D10 0.55±0.1 µm |
| Wollastonite | Filler | Particle size D50 15 µm |
| Glass flake | Filler | Particle size D50: 10 µm |
| Nepheline | Filler | Particle size D90 2.3 µm; D50 6.8 µm; D10 1 µm |
| Kaolin | Filler | Particle size D50 2 µm |
| Dolomite | Filler | Particle size D50 7 µm |
| Diatomite | Filler | Particle size D50 11 µm |
| Boron Nitride | Filler | Particle size D50: 5 µm |
| Ceramic beads | Filler | Particle size 4 µm, > 50% of the particles are 4 µm or larger |
| Alumina | Filler | Particle size D50: 10 µm |
| Aluminum hydroxide | Filler | Particle size D50: 8 µm |
| Specialized acrylic copolymer with silica | Flow additive | Activity: Content of specialized copolymer is 66 - 68% |
| Copolymer of methyacrylate and butyl acrylate | Levelling agent | Softening point: 95-125°C |
| Benzoin | Degassing agent | Melting point 134-138°C |

### Preparation of Powdered Coating Samples

Powder coatings were prepared using the following procedure:
(1) The raw materials were placed into a mixing tank, according to the corresponding weight percentage for pre-mixing, as shown in the Tables below, wherein the amounts of the ingredients are specified in wt% unless otherwise specified. Blending was carried out in the mixing tank in two stages. The first blending time was 3-5 minutes, the rotating speed was 700 r/min, and the working temperature was 20-30°C. The second blending time was 3-5 minutes, the rotating speed was 900 r/min, and the working temperature was 20-30°C.
(2) A twin-screw extruder was used to melt, mix, disperse and extrude the pre-mixed raw materials uniformly. The temperature of the extruder was 90-110°C, and the screw frequency was controlled at 30-50Hz. The extruded mixture was then tableted and broken.
(3) The crushed materials were graded and crushed by an ACM mill. The frequency of the disc was 25-35Hz, and the frequency of the classifier was 25-35Hz.
(4) The finely pulverized materials were classified into powder coatings with a particle size D50 of 30-50 microns.
(5) The composition of the powder coatings prepared for testing are summarised in the Tables below, wherein the amounts specified are wt%, unless otherwise specified.

### Preparation of samples for testing

Panels for testing were prepared according to the following steps:
1. The panels were aluminium panels, type AL 6036, having a panel size of 50*30*0.8 mm. The panels were successively pretreated by soaking in an alkaline or acidic solution, a rinsing bath, an acid wash bath, a rinsing bath and then a treatment to ensure that the panels were chrome-free before they were dried in an oven at a temperature of maximum 100°C object temperature.
2. Protection tape was applied to the bottom rim of each panel back (approx. 0.5 × 2 cm) to avoid coating of this area.
3. In a cleaned spray booth, spray guns were cleaned thoroughly with compressed air. The spray pattern of the gun was checked to ensure that it deposits a uniform powder layer across the test panels.
4. Each panel was sprayed individually for the length of time required to achieve the specified target thickness 100-130 µm.
5. The panels were hung inside a curing oven and cured using an object temperature of 200 °C/10min.
6. The protection tape was removed after the panels cooled down.
7. The coating thickness was measured. The panels used for testing had a thickness of 100-130 µm.
8. For adhesion testing, the panels were tested before any exposure to electrolyte.
9. For insulation and voltage testing, the panels were tested before any exposure to electrolyte as well as after soaking in electrolyte.
10. For discoloration testing, the panels were tested after exposure to electrolyte.

### Soaking in electrolyte

0.5 liter electrolyte was prepared. The composition of the electrolyte was:
Ethylene carbonate (EC), diethyl carbonate (DEC) and dimethyl carbonate (DMC) mixed in a weight or volume ratio of EC/DEC/DMC=2/1/7; Lithium hexafluorophosphate (1.1mol); additives vinylene carbonate (VC) =2%, 1,3-propane sultone =1%

Half of the coated panel was immersed in the electrolyte and the other half of the panel was left in the air. The container was sealed and left for 7 days. After 7 days, the panel was removed from the electrolyte, dried, and then tested as described below. These test conditions represent extreme conditions, much harsher than those a coating would be exposed to in a battery assembly, where contact with electrolyte arises due to spillage.

### Test Methods

### • Adhesion test

Samples were tested according to the Cross-cut test as described in ISO 2409:2013 (E). In the results, Gt0 is best, and Gt5 is worst. / = Not tested

### • Insulation test

Samples were tested according to the following procedure. Three parallel samples were tested for each composition:
1. Establish connections: plug in the power supply and turn on the power supply of the equipment. The coated panel is put on a thick rubber pad to make sure there is no electric leakage when voltage is applied. A clip is connected to the back side bottom part of the bare metal (previous covered by the protection tape) and a testing electrode from the equipment is connected to the top coated part of the panel via a profiling checker in Step 3.
2. Parameter Settings: Set DC 1000V, test time = 60 seconds, the lower limit of resistance is 500 MΩ. The voltage rises from zero to the 1000V in 1 second
3. The profiling checker, i.e. a conductive metal panel having the same shape as the coated panel, but with a slightly smaller size (about 5 mm shorter in all directions), is placed on top of the coated panel to be tested. The profiling checker is pressed with a force of ≥1.5 kgf to ensure that a potential breakdown point (of the coated panel) is at the non-edge area (area covered with the profiling checker) when voltage is applied, using the testing electrode via the profiling checker to test insulation resistance.

### Criteria to pass the insulation test:

### Sample resists DC 1000V with a resistance of >500MΩ:

O = pass test criteria
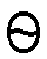 = No breakdown of sample, but resistance below the limit of 500MΩ
X = voltage resistance test failed, no testing of insulation resistance

### • Voltage test

Samples were tested according to the following procedure. Three parallel samples were tested for each composition:
1. Establish connections: plug in the power supply and turn on the power supply of the equipment. The coated panel is put on a thick rubber pad to make sure there is no electric leakage when voltage is applied. A clip is connected to the back side bottom part of the bare metal (previous covered by the protection tape) and a testing electrode from the equipment is connected to the top coated part of the panel via a profiling checker in Step 3.
2. Parameter Settings: Set DC 2700V, test time = 60 seconds, maximum leakage current is not more than 1 mA. The voltage rises from zero to 2700 V in 1s
3. The profiling checker is placed on top of the coated panel to be tested. The profiling checker is pressed with a force of ≥1.5 kgf to ensure that a potential breakdown point (of the coated panel) is at the non-edge area (area covered with the profiling checker) when voltage is applied, using the testing electrode via the profiling checker to test leakage current.

### Criteria to pass the voltage test:

Sample resists 2700V, with a maximum leakage current of not more than 0.1mA
O= pass test criteria
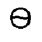 = Small current leakage above the limit of 1mA at a voltage below 2.7kV
X= breakdown of coating film

Voltage testing and then insulation testing is typically carried out on the same panel, since the steps are the same except for the parameter setting. In cases where the coating film broke down during voltage testing, insulation testing cannot be carried out on the same panel.

### Discoloration after soaking

The discolouration of the coating, after soaking, was visually inspected. This was done prior to the insulation and voltage tests. The assessment criteria applied were as follows:
O= slight discoloration of soaked coating film
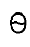 = serious discoloration of soaked coating film
X= Serious discoloration of entire coating film

### Example 1 - Effect of curing agents

The powder coatings described in table 1 below were prepared, along with 7 comparative examples. The comparative examples employed a variety of curing agents, other than those comprising an imidazole, imidazoline or imidazolidine ring. The results of testing are also shown in Table 1. All examples passed the insulation test and the voltage test before the soaking in electrolyte.

The results in Table 1 show that when the curing agent present in the particulate coating composition comprises an imidazole, imidazoline or imidazolidine ring (e.g. 2-phenyl-2-imidazoline), the resulting coating is well adhered to the substrate and is able to withstand exposure to electrolyte. After soaking in electrolyte for 7 days, which are extreme test conditions, the coatings made from the composition comprising 2-phenyl-2-imidazoline still passed the voltage test and did not break down in the insulation test. In contrast, the coatings made from the compositions comprising a variety of other curing agents, failed the voltage test, and therefore could not undergo the insulation test, after soaking in electrolyte. The level of discoloration was also more serious in the coatings comprising curing agents other than 2-phenyl-2-imidazoline.

The results in Table 1, specifically examples 1-5, also show that a range of different types of epoxy resins may be successfully employed in the particulate coating compositions of the present invention.

Examples 9 and 10 in Table 1 show a particularly strong performance. In these examples, the ratio of 2-phenyl-2-imidazoline to epoxy resin is higher than in some of the other examples. It is believed that the relatively higher ratio of curing agent may result in a higher density of cross-linking in the final coating, and hence lead to the improved performance results observed.

| **Component** (wt%) | Ex 1 | Ex 2 | Ex 3 | Ex 4 | Ex 5 | Ex 6 | Ex 7 | Ex 8 | Ex 9 | Ex 10 | CEx 1 | CEx 2 | CEx 3 | CEx 4 | CEx5 | CEx 6 | CEx 7 |
|---|---|---|---|---|---|---|---|---|---|---|---|---|---|---|---|---|---|
| **Epoxy resin** | | | | | | | | | | | | | | | | | |
| Epoxy type 3 EEW 730-800 | 66.5 | × | × | × | × | × | 68.6 | 68 64.8 | | 64.2 | 66.5 36.5 37.3 | | | 66 | 56.4 63.3 | | 66.5 |
| Epoxy type 4 EEW 875-975 | × | 66.5 | × | × | × | × | × | × | × | × | × | × | × | × | × | × | × |
| Epoxy type 5 EEW1150-1300 | × | × | 67.5 | × | × | × | × | × | × | × | × | × | × | × | × | × | × |
| Novolac EEW 750-850 | × | × | × | 66.5 | × | × | × | × | × | × | × | × | × | × | × | × | × |
| Isocyanate modified bisphenol A epoxy resin EEW 380-420 g/eq | | | | | 63.3 | | | | | | | | | | | | |
| BPF type epoxy EEW 600-700 | × | × | × | × | × | 65.9 | × | × | × | × | × | × | × | × | × | × | × |

| **Curing agent** | | | | | | | | | | | | | | | | | |
|---|---|---|---|---|---|---|---|---|---|---|---|---|---|---|---|---|---|
| 2-Phenyl-2-imidazoline | 3.5 | 3 | 2.5 | 3.5 | 6.7 | 4.1 | 1.4 | 2 | 5.2 | 5.8 | × | × | × | × | × | × | × |
| Accelerated DICY | × | × | × | × | × | × | × | × | × | × | × | × | × | × | × | × | 3.5 |
| OTB (substituted dicyandiamide type) | × | × | × | × | × | × | × | × | × | × | 3.5 | × | × | × | × | × | × |
| Dicyandiamide | × | × | × | × | × | × | × | × | × | × | × | 3.5 | 2.7 | 4 | × | × | × |
| Phenolic hardener | × | × | × | × | × | × | × | × | × | × | × | × | × | × | 13.6 | × | × |
| Pyromellitic dianhydride (PMDA) | × | × | × | × | × | × | × | × | × | × | × | × | × | × | × | 6.7 | × |

| **Others** | | | | | | | | | | | | | | | | | |
|---|---|---|---|---|---|---|---|---|---|---|---|---|---|---|---|---|---|
| Flow additive Benzoin : Leveling additive (0.6 : 0.3 : 0.5) | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 |
| **Pigments** | | | | | | | | | | | | | | | | | |

**Table 1**

| | | | | | | | | | | | | | | | | | |
|---|---|---|---|---|---|---|---|---|---|---|---|---|---|---|---|---|---|
| Titanium dioxide : carbon black : organic red organic blue (8 : 0.01 : 0.09 : 0.3) | 8.4 | 8.4 | 8.4 | 8.4 | 8.4 | 8.4 | 8.4 | 8.4 | 8.4 | 8.4 | 8.4 | 8.4 | 8.4 | 8.4 | 8.4 | 8.4 | 8.4 |

| **Fillers** | | | | | | | | | | | | | | | | | |
|---|---|---|---|---|---|---|---|---|---|---|---|---|---|---|---|---|---|
| Precipitated barium sulfate | 20.2 | 20.2 | 20.2 | 20.2 | 20.2 | 20.2 | 20.2 | 20.2 | 20.2 | 20.2 | 20.2 | 20.2 | 20.2 | 20.2 | 20.2 | 20.2 | 20.2 |
| Total | 100 | 100 | 100 | 100 | 100 | 100 | 100 | 100 | 100 | 100 | 100 | 100 | 100 | 100 | 100 | 100 | 100 |

| **Test results** | | | | | | | | | | | | | | | | | |
|---|---|---|---|---|---|---|---|---|---|---|---|---|---|---|---|---|---|
| Adhesion before soaking | Gt0 | Gt0 | Gt0 | Gt0 | Gt0 | Gt0 | Gt2 | Gt0 | Gt0 | Gt0 | Gt0 | Gt0 | / | / | Gt0 | Gt5 | Gt0 |
| Insulation after electrolyte soak test | 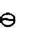 | 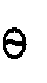 | 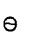 | 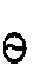 | 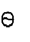 | 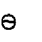 | 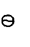 | 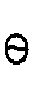 | 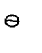 | ○ | × | × | 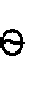 | 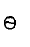 | × | × | 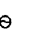 |
| Voltage after electrolyte soak test | ○ | 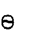 | 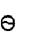 | ○ | ○ | ○ | ○ | ○ | ○ | ○ | × | × | × | × | × | × | × |
| Discoloration after electrolyte soak test | 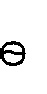 | 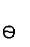 | 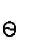 | 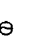 | 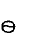 | 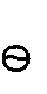 | 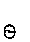 | 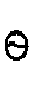 | ○ | ○ | 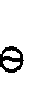 | 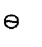 | 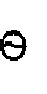 | 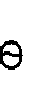 | 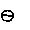 | 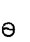 | 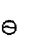 |

### Example 2 - Effect of total amount of epoxy resin in coating composition

The powder coatings described in table 2 below were prepared. All examples passed the insulation test and the voltage test before soaking in electrolyte. None of the examples were tested for adhesion before soaking.

**Table 2**

| **Component** (wt%) | Ex 11 | Ex 12 | Ex 13 | Ex 14 | Ex 15 |
|---|---|---|---|---|---|
| **Epoxy resin** | | | | | |
| Epoxy type 3 EEW 730-800 | 38 | 47.5 | 57 | 76 | 85.5 |

| **Curing agent** | | | | | |
|---|---|---|---|---|---|
| 2-Phenyl-2-imidazoline | 2 | 2.5 | 3 | 4 | 4.5 |

| **Others** | | | | | |
|---|---|---|---|---|---|
| Flow additive | 0.6 | 0.6 | 0.6 | 0.6 | 0.6 |
| Benzoin | 0.3 | 0.3 | 3.3 | 0.3 | 0.3 |
| Levelling additive | 0.5 | 0.5 | 3.5 | 0.5 | 0.5 |

| **Pigments** | | | | | |
|---|---|---|---|---|---|
| Titanium Dioxide | 8 | 8 | 8 | 8 | 8 |
| Carbon black | 0.01 | 0.01 | 0.01 | 0.01 | 0.01 |
| Organic red color | 0.09 | 0.09 | 0.09 | 0.09 | 0.09 |
| Blue | 0.3 | 0.3 | 0.3 | 0.3 | 0.3 |

| **Fillers** | | | | | |
|---|---|---|---|---|---|
| Precipitated barium sulfate | 50.2 | 40.2 | 30.2 | 10.2 | 0.2 |
| Total | 100 | 100 | 100 | 100 | 100 |

| **Test results** | | | | | |
|---|---|---|---|---|---|
| Insulation test after electrolyte soak test | Θ | Θ | Θ | Θ | Θ |
| Voltage test after electrolyte soak test | Θ | Θ | Θ | Θ | Θ |
| Discoloration after electrolyte soak test | Θ | Θ | Θ | Θ | Θ |

The results in Table 2 show that the particulate coating compositions of the present invention may comprise a wide range of epoxy resin and curing agent combinations. These examples show that particulate coating compositions comprising 38-85.5 wt% epoxy resin and 2-5 wt% curing agent, all produce coatings that pass the insulation and voltage tests, even after exposure to electrolyte for 7 days. The examples also show that the particulate compositions of the invention may comprise a range of filler, specifically 0.2-50.2 wt%, and still produce coatings passing the insulation and voltage tests, even after exposure to electrolyte.

### Example 3 - Effect of fillers in coating composition

The powder coatings described in table 3 below were prepared. The results of testing are also shown in Table 3. All examples passed the insulation test and the voltage test before soaking in electrolyte. All coating films had an adhesion of Gt0 before soaking.

The results in Table 3 show that a wide range of fillers may be used in the particulate coating compositions of the present invention. Compositions comprising a single filler as well as mixtures of fillers performed well. When filler is present, the coatings produced from the particulate coating compositions of the present invention, pass the insulation and voltage tests, even after exposure to electrolyte.

### Example 4 - Effect of filler combinations and pigments in coating composition

The powder coatings described in table 4 below were prepared. The results of testing are also shown in Table 4. All examples passed the insulation test and the voltage test before soaking in electrolyte.

The results in Table 4 show that both organic and inorganic pigments may be employed in the particulate compositions of the present invention.

| **Component** (wt%) | Ex 16 | Ex 17 | Ex 18 | Ex 19 | Ex 20 | Ex 21 | Ex 22 | Ex 23 | Ex 24 | Ex 25 | Ex 26 | Ex 27 | Ex 28 | Ex 29 | Ex 30 |
|---|---|---|---|---|---|---|---|---|---|---|---|---|---|---|---|
| **Epoxy resin** | | | | | | | | | | | | | | | |
| Epoxy type 3 EEW 730-800 | 66.5 | 66.5 | 66.5 | 66.5 | 66.5 | 66.5 | 66.5 | 66.5 | 66.5 | 66.5 | 66.5 | 66.5 | 66.5 | 66.5 | 66.5 |

| **Curing agent** | | | | | | | | | | | | | | | |
|---|---|---|---|---|---|---|---|---|---|---|---|---|---|---|---|
| 2-Phenyl-2-imidazoline | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 |

| **Others** | | | | | | | | | | | | | | | |
|---|---|---|---|---|---|---|---|---|---|---|---|---|---|---|---|
| Flow additive : Benzoin Leveling additive (0.6 : 0.3 : 0.5) | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 |

| **Pigments** | | | | | | | | | | | | | | | |
|---|---|---|---|---|---|---|---|---|---|---|---|---|---|---|---|
| Titanium dioxide carbon black organic red organic blue (8 : 0.01 : 0.09 : 0.3) | 8.4 | 8.4 | 8.4 | 8.4 | 8.4 | 8.4 | 8.4 | 8.4 | 8.4 | 8.4 | 8.4 | 8.4 | 8.4 | 8.4 | 8.4 |

| **Fillers** | | | | | | | | | | | | | | | |
|---|---|---|---|---|---|---|---|---|---|---|---|---|---|---|---|
| Wollastonite | 20.2 | × | × | × | × | × | × | × | × | × | × | × | × | × | × |
| Glass flake | × | 20.2 | × | × | × | × | × | × | × | × | × | × | × | × | × |
| Nepheline | × | × | 20.2 | × | × | × | × | × | × | × | × | × | × | × | × |
| Kaolin | × | × | × | 20.2 | × | × | × | × | × | × | × | × | 10.1 | 10.1 | 10.1 |
| Dolomite | × | × | × | × | 20.2 | × | × | × | × | × | × | × | × | × | × |
| Diatomite | × | × | × | × | × | 20.2 | × | × | × | × | × | × | × | × | × |
| Boron nitride | × | × | × | × | × | × | 20.2 | × | × | × | × | × | × | × | × |
| Alumina | × | × | × | × | × | × | × | 20.2 | × | × | × | × | × | × | × |
| Aluminium hydroxide | × | × | × | × | × | × | × | × | 20.2 | × | × | × | × | × | × |
| Precipitated barium sulfate | × | × | × | × | × | × | × | × | × | 10.1 | 10.1 | × | 10.1 | × | × |
| Mica | × | × | × | × | × | × | × | × | × | 10.1 | × | 10.1 | × | × | 10.1 |
| Talc | × | × | × | × | × | × | × | × | × | × | 10.1 | 10.1 | × | 10.1 | × |
| Total | 100 | 100 | 100 | 100 | 100 | 100 | 100 | 100 | 100 | 100 | 100 | 100 | 100 | 100 | 100 |
| **Test results** | | | | | | | | | | | | | | | |

**Table 3**

| Adhesion before soaking | Gt0 | Gt0 | Gt0 | Gt0 | Gt0 | Gt0 | Gt0 | Gt0 | Gt0 | / | / | / | Gt0 | Gt0 | Gt0 |
|---|---|---|---|---|---|---|---|---|---|---|---|---|---|---|---|
| Insulation after electrolyte soak test | Θ | Θ | Θ | Θ | Θ | Θ | Θ | Θ | Θ | Θ | Θ | Θ | Θ | Θ | Θ |
| Voltage after electrolyte soak test | Θ | ○ | Θ | ○ | Θ | Θ | Θ | Θ | Θ | Θ | Θ | Θ | ○ | ○ | ○ |
| Discoloration after electrolyte soak test | Θ | Θ | Θ | Θ | Θ | Θ | Θ | Θ | Θ | Θ | Θ | Θ | Θ | Θ | Θ |

**Table 4**

| **Component** (wt%) | Ex 31 | Ex 32 | Ex 33 | Ex 34 | Ex 35 |
|---|---|---|---|---|---|
| **Epoxy resin** | | | | | |
| Epoxy type 3 EEW 730-800 | 66.5 | 66.5 | 66.5 | 66.5 | 66.5 |

| **Curing agent** | | | | | |
|---|---|---|---|---|---|
| 2-Phenyl-2-imidazoline | 3.5 | 3.5 | 3.5 | 3.5 | 3.5 |

| **Others** | | | | | |
|---|---|---|---|---|---|
| Flow additive | 0.6 | 0.6 | 0.6 | 0.6 | 0.6 |
| Benzoin | 0.3 | 0.3 | 0.3 | 0.3 | 0.3 |
| Leveling additive | 0.5 | 0.5 | 0.5 | 0.5 | 0.5 |

| **Pigments** | | | | | |
|---|---|---|---|---|---|
| Titanium Dioxide | 25 | × | × | × | × |
| Carbon black | × | 1.1 | × | × | × |
| Organic red | × | × | 3 | × | × |
| Inorganic ultramarine | × | × | × | 3 | × |
| Organic green | × | × | × | × | 1.5 |

| **Fillers** | | | | | |
|---|---|---|---|---|---|
| Prec. barium sulfate | 3.6 | 27.5 | 25.6 | 25.6 | 27.1 |
| Total | 100 | 100 | 100 | 100 | 100 |

| **Test results** | | | | | |
|---|---|---|---|---|---|
| **Film thickness** | 100-130 | 100-130 | 100-130 | 100-130 | 100-130 |

| **Adhesion before soaking** | Gt0 | Gt0 | / | / | Gt0 |
|---|---|---|---|---|---|
| Insulation before electrolyte soak test | ○ | ○ | ○ | ○ | ○ |
| Voltage before electrolyte soak test | ○ | ○ | ○ | ○ | ○ |
| Insulation after electrolyte soak test | 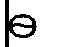 | 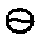 | 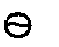 | 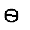 | 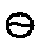 |
| Voltage after electrolyte soak test | ○ | ○ | 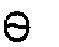 | 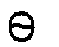 | ○ |
| Discoloration after electrolyte soak test | ○ | ○ | ○ | ○ | ○ |

## Claims

1. A particulate coating composition, and preferably a powder coating composition, comprising:
(i) an epoxy resin,
(ii) a curing agent, wherein the curing agent comprises an imidazole, imidazoline or imidazolidine ring, and preferably an imidazoline ring;
(iii) a filler; and
(iv) a degassing agent, preferably benzoin

2. A composition as claimed in claim 1, wherein said curing agent comprises, or more preferably consists, of 2-phenyl-2-imidazoline.

3. A composition as claimed in claim 1 or 2, wherein said epoxy resin has an epoxy equivalent weight (EEW) of 200-1950 g/eq, preferably 200-1300 g/eq and more preferably 400-1300 g/eq.

4. A composition as claimed in any preceding claim, wherein said epoxy resin is selected from bisphenol A based epoxy resins, novolac-modified bisphenol A based epoxy resin, bisphenol F epoxy resin, isocyanate modified bisphenol A epoxy resin and mixtures thereof

5. A composition as claimed in any preceding claim comprising 40-99 wt%, more preferably 50-95 wt%, still more preferably 50-95 wt% and yet more preferably 60-90wt% epoxy resin, based on the total weight of the particulate coating composition and/or 1-35 wt%, more preferably 1.5-20 wt% and still more preferably 2-15 wt% curing agent, based on the amount of epoxy resin.

6. A composition as claimed in any preceding claim, wherein said filler is selected from barium sulphate, preferably precipitated barium sulphate, mica, talc, wollastonite (calcium metasilicate), glass flake, nepheline, kaolin, dolomite, diatomite, boron nitride, alumina, aluminium hydroxide and mixtures thereof and more preferably barium sulphate, preferably precipitated barium sulphate, kaolin and mixtures thereof.

7. A composition as claimed in any preceding claim, comprising 0.01-60 wt%, more preferably 1.5-50 wt% and still more preferably 10-38 wt% filler, based on the total weight of the particulate coating composition.

8. A composition as claimed in any preceding claim, comprising 0.15-0.45 wt%, more preferably 0.17-0.4 wt% and still more preferably 0.2-0.35 wt% degassing agent, based on the total weight of the particulate coating composition.

9. A container containing a particulate coating composition as claimed in any one of claims 1 to 8.

10. A process for preparing a particulate coating composition as claimed in any one of claims 1 to 8, comprising:
(i) blending epoxy resin, curing agent, wherein the curing agent comprises an imidazole, imidazoline or imidazolidine ring, and preferably an imidazoline ring, filler and degassing agent, to form a mixture; and
(ii) extruding said mixture to form particles.

11. Use of a particulate coating composition as claimed in any one of claims 1 to 8 to coat a substrate, preferably a metal substrate, e.g. aluminium.

12. A method for coating a substrate, preferably a metal substrate, e.g. aluminium, with a particulate coating composition as claimed in any one of claims 1 to 8, comprising:
(i) applying said particulate coating composition to said substrate; and
(ii) curing said particulate coating composition.

13. A coating, preferably a cured coating, comprising a particulate coating composition as claimed in any one of claims 1 to 8.

14. A substrate, preferably a metal substrate, e.g. aluminium, coated with a particulate coating composition as claimed in any one of claims 1 to 8 or a coating as claimed in claim 13.

15. A battery assembly comprising at least one battery cell, wherein said at least one battery cell has a coating formed on at least one surface, and said coating is formed from a composition as claimed in any one of claims 1-8.
